# EUROPÄISCHE PATENTSCHRIFT

(11) **EP 2 392 713 B1**
(45) Veröffentlichungstag und Bekanntmachung des Hinweises auf die Patenterteilung: **09.01.2013**
(21) Anmeldenummer: 11162433.4
(22) Anmeldetag: 14.04.2011
(51) Int. Cl.: D04H 1/54, D04H 3/14

(54) **Gravurwalze sowie Verfahren zur Verfestigung eines thermoplastische Filamente umfassenden Vlieses**
Engraved roller and method of consolidating a nonwoven fabric comprising thermoplastic filaments
Rouleau gravé et méthode de consolidation d'un tissu non tissé à base de filaments thermoplatiques

(30) Priorität: 07.06.2010 DE 102010017255
(43) Veröffentlichungstag der Anmeldung: 07.12.2011
(73) Patentinhaber: Andritz Küsters GmbH, 47805 Krefeld (DE)
(72) Erfinder: Wandke, Achim, 47906 Kempen (DE); Mai, Udo, 47918 Tönisvorst (DE)
(74) Vertreter: Kluin, Jörg-Eden

(56) Entgegenhaltungen:
- EP-A1- 1 338 262
- EP-A1- 1 340 848
- EP-B1- 1 448 361
- GB-A- 978 654
- JP-A- 1 101 138

## Beschreibung

Die Erfindung betrifft eine Gravurwalze mit einer an deren Arbeitsumfang vorgesehenen Gravur, die Gravurtäler und Plateauflächen umfasst, um im Betrieb gegen ein Gegenwerkzeug zu wirken, sowie ein Verfahren zur Verfestigung eines thermoplastische Filamente umfassenden Vlieses, bei dem eine Lage von Filamenten einem von zwei Walzen gebildeten Walzenspalt zugeführt wird, von denen zumindest eine als Gravurwalze ausgebildet und beheizt ist.

Beim sogenannten "Thermobonding" eines thermoplastische Filamente umfassenden Vlieses werden die thermoplastischen Filamente bereichsweise in einem regelmäßigen Muster miteinander verschweißt. Der Anteil der verschweißten Fläche an der Gesamtfläche beträgt hierbei üblicherweise zwischen 2% bei Filtermedien bis hin zu 25% bei technischen Vliesen.

Es ist bekannt, das Thermobonding des Vlieses mittels einer Vorrichtung zu bewerkstelligen, die einen Walzenspalt umfasst, der von einer meist beheizten glatten und einer stets beheizten Gravurwalze gebildet wird. Letztere weist an ihrem Arbeitsumfang eine Gravur auf, deren Plateauflächen zu der glatten Walze in dem Arbeitsspalt einen Abstand aufweisen, dass die Plateauflächen das Vlies verdichten und an den verdichteten Stellen einen Temperatureintrag bewirken, der zum Verschweißen der Filamente in dem verdichteten Bereich führt. Die Gravurtiefe einer solchen Gravurwalze, d.h. der Abstand zwischen den Gravursohlen und den Plateauflächen beträgt bei derartigen Gravurwalzen meist zwischen etwa 0,3 bis etwa 1,0 mm.

Die Festigkeit in verschiedenen Raumrichtungen des Vlieses wird überwiegend durch die Gravurpunkte, die durch den Einfluss der Plateauflächen der Gravur- und der glatten Gegenwalze hervorgerufen werden, generiert.

Mit zunehmender Produktionsgeschwindigkeit muss zumindest die Gravurwalze auf immer höhere Temperaturen aufgeheizt werden, da die Zeit, die für den zum Verschweißen benötigten Temperatureintrag zur Verfügung steht, mit zunehmender Produktionsgeschwindigkeit abnimmt. Es hat sich gezeigt, dass die Temperaturerhöhung die Anzahl der Fasern erhöht, die an den Flanken und an der Sohle der Gravur anschmelzen, was zu einer unerwünschten Verhärtung des Vlieses führt.

Aus der EP 1 338 262 A1 ist eine Außenlage für ein absorbierendes Produkt, wie beispielsweise für einen Hygieneartikel bekannt. Diese Außenlage umfasst zwei Faserschichten, die an diskreten Punkten miteinander in einem vorbestimmten Muster miteinander verbunden sind. Hierzu soll eine Gravurwalze Verwendung finden, die in ihren Gravurtälern ein wärmeisolierendes Material einer Dicke zwischen 1 bis 3 mm aufweisen.

Die EP 1 340 848 A1 betrifft ein bauschiges Bahnmaterial mit dreidimensionalen Vorsprüngen. Es umfasst eine erste und eine zweite Faserschicht, die miteinander verbunden sind. Die erste Faserschicht enthält wärmeschrumpfbare Fasern, wohingegen die Fasern der zweiten Schicht nicht wärmeschrumpfbar sind. Die Verbindungsstellen werden durch das wärmeschmelzbare Harz gebildet. Zur Herstellung eines derartigen Bahnmaterials wird eine Gravurwalze mit wärmeisolierendem Material beschrieben, welches die Oberflächentemperatur der Walze 10°c bis 20° C unter derjenigen der Vorsprünge hält. Als wärmeisolierendes Material wird Silikon in einer Dicke zwischen 1 bis 3 mm genannt.

Aus der EP 1 448 361 B1 ist ein Flächengebilde aus Fasern und/oder Filamenten bekannt, die durch ein Bindemittel miteinander verbunden sind. Das Flächengebildet wird bei einer Temperatur zwischen 65° C und 160° C der Einwirkung von Prägewalzen ausgesetzt, die zahnradförmig ausgebildet sind und auf einem bestimmten Abstand zueinander gehalten werden. Die Erhebungen und Vertiefungen der beiden Prägewalzen sind so ausgebildet, dass die von den Erhebungen begrenzten Flächen dem Vliesstoff eine scheinbare Dicke von 0,5 mm bis 5,5 mm verleihen.

Der Erfindung liegt daher die Aufgabe zugrunde, eine verbesserte Gravurwalze sowie ein Verfahren zu schaffen, welche bzw. welches zur Herstellung einer thermoplastische Filamente umfassenden Vliesbahn mit verbesserten Eigenschaften geeignet ist.

Diese Aufgabe wird durch die in Anspruch 1 wiedergegebene Gravurwalze und durch das in Anspruch 9 wiedergegebene Verfahren gelöst.

Dadurch, dass erfindungsgemäß die Gravurtäler und/oder die Gravurflanken zumindest teilweise mit einem wärmeisolierenden und vorzugsweise elastischen, beispielsweise gummielastischen Material ausgefüllt und/oder bedeckt sind, wird verhindert, dass an den Flanken und an den Sohlen der Gravurtäler die Filamente des Vlieses auf eine Temperatur aufgeheizt werden, die zu einem Aufschmelzen und damit zu einer unerwünschten Verfestigung führt. Dieser Effekt wird bei der erfindungsgemäßen Gravurwalze dadurch bewirkt, dass die Oberflächentemperaturen der Sohlen und Flanken in den von dem wärmeisolierenden Material überdeckten Bereichen niedriger sind als an den nicht überdeckten Bereichen. Hierzu sind die Gravurtäler bis zumindest einem Zehntel des Abstandes zwischen Sohle und Plateau mit dem wärmeisolierenden und vorzugsweise elastischen Material gefüllt.

Ferner reduziert dieses Material die Wärmeabgabe der Gravurwalze durch Konvektion und Strahlung nach außen, so dass zur Erzielung einer gewünschten Temperatur an den Gravurflächen eine im Vergleich, zu herkömmlichen, innen beheizten Walzen nur geringere Heizleistung benötigt wird, wodurch Energie eingespart werden kann.

Ist das Material - wie bevorzugt - elastisch, so wird die Gefahr, dass es während des Verfestigungsprozesses in den Gravurtälern zu unerwünscht hohen, sich nachteilig auf die Qualität des Vlieses auswirkenden Druckspitzen kommt, reduziert.

Bei einer bevorzugten Variante der erfindungsgemäßen Gravurwalze ist das die Gravurtäler zumindest teilweise ausfüllende Material elastisch komprimierbar ausgebildet. Eine Nachgiebigkeit zur Reduzierung der Druckspitzen in den Gravurtälern erfordert dann nicht mehr, dass das Material beispielsweise aus den Mitten an den Randbereich verdrängt wird.

Grundsätzlich ist als Material jedes Material geeignet, welches dies für die Anwendung erforderlichen physikalischen Eigenschaften aufweist. Denkbar sind insbesondere Materialien, die Silikon umfassen.

Besonders bevorzugt ist es jedoch, so viel wärmeisolierendes und vorzugsweise elastisches Material vorzusehen, dass die Gravurtäler zu mindestens einem, weiterhin bevorzugt bis zu zwei Drittel der Höhe zwischen Sohle und Plateau von dem Material ausgefüllt sind.

Zur Verbesserung der Haftung des wärmeisolierenden Materials sind die Gravurtäler und/oder Gravurflanken aufgerauht, wobei die mittlere Rauheit Rₐ der aufgerauten Oberflächen vorzugsweise zwischen 0,8 µm und 12,5 µm beträgt.

Die Erfindung erstreckt sich auch auf ein Verfahren zur Verfestigung eines thermoplastische Filamente umfassenden Vlieses, bei dem eine Lage von Filamenten einem von zwei Walzen gebildeten Walzenspalt zugeführt wird, von denen zumindest eine als Gravurwalze ausgebildet und beheizt ist, bei welchem die Gravurwalze eine der vorbeschriebenen Ausgestaltungen aufweist.

Die Erfindung soll nun anhand der Zeichnung weiter erläutert werden. Es zeigen:
- Fig. 1: - ausschnittsweise und schematisch - eine erfindungsgemäße Gravurwalze in Anlage mit einer glatten Walze während eines laufenden Verfestigungsverfahrens;
- Fig. 2: - wiederum rein schematisch und ausschnittsweise - einen Schnitt quer zur Längsrichtung einer Gravurwalze durch ein Gravurtal im unbelasteten Zustand des in dem Gravurtal befindlichen Materials sowie
- Fig. 3: eine Fig. 2 entsprechende Darstellung eines Ausführungsbeispiels der erfindungsgemäßen Gravurwalze, bei welchem das thermisch isolierende und vorzugsweise nachgiebige Material eine muldenförmige Oberfläche aufweist.

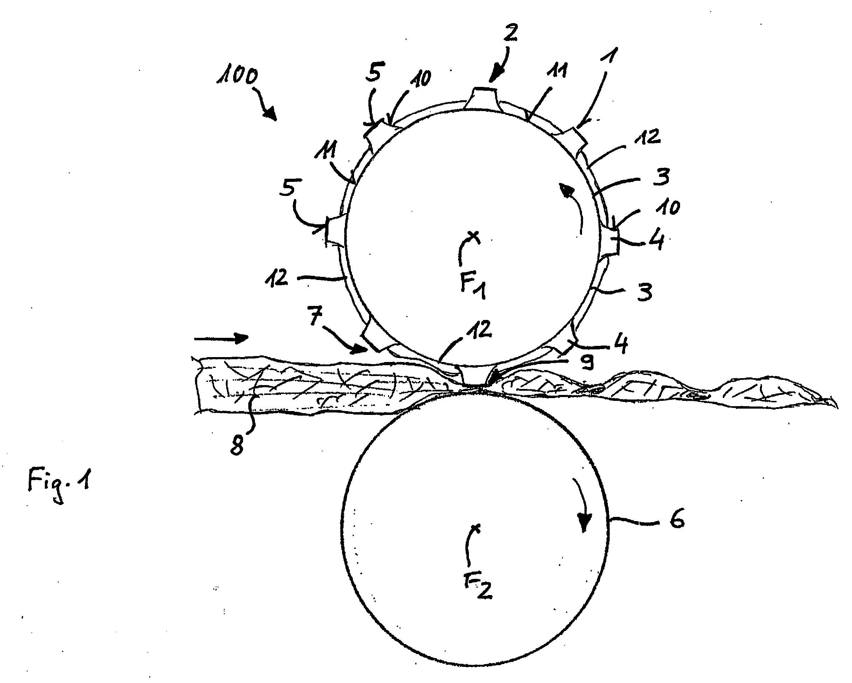

Die in Fig. 1 als Ganzes mit 100 bezeichnete Gravurwalze weist einen Arbeitsumfang 1 auf, an dem eine Gravur 2 vorgesehen ist. Sie umfasst Gravurtäler 3, die voneinander durch Erhebungen 4 abgegrenzt sind, deren radiale Außenflächen Plateauflächen 5 ausbilden.

Die Gravurwalze 100 bildet zusammen mit einer in Fig. 1 darunter angeordneten glatten Walze 6 einen Walzenspalt 7, durch den zwecks Thermobonding eine Bahn 8, die thermoplastische Filamente umfasst, kontinuierlich zugeführt wird. Bei dem in Fig. 1 dargestellten Ausführungsbeispiel rotiert die Gravurwalze 100 entgegen, die glatte Walze 6 entgegen dem Uhrzeigersinn um die Drehachsen F1, F2, so dass die Bahn 8 von links nach rechts verläuft.

Sowohl die Gravurwalze 100, als auch die glatte Walze 6 sind mit in der Zeichnung nicht erkennbaren Mitteln, die beispielsweise durch im Innern angeordnete Heizelemente oder auch äußere Heizstrahler umfassen, beheizt.

Wie aus Fig. 1 sinnfällig wird, erfährt die Bahn 8 beim Durchtritt durch den Walzenspalt 7 im Bereich der Plateauflächen 5 eine Verdichtung und Aufheizung. Die über den Plateauflächen 5 befindlichen Bereiche 9 werden hierbei erwärmt, so dass die Filamente in den Bereichen 9 miteinander verschweißen.

Um ein Anschmelzen der Filamente an Flanken 10 der Erhebungen 4 und an Sohlen 11 der Gravurtäler 3 zu vermeiden, ist in den Gravurtälern ein thermisch isolierendes, vorzugsweise elastisches Material 12 vorgesehen, welches die Flanken 10 zumindest teilweise und die Sohlen 11 überdeckt. Das Material 12 verhindert, dass die Filamente der Bahn 8 in dem von dem Material überdeckten Bereich der Flanken 10 und an der Sohle 11 in unmittelbaren Kontakt mit der Gravurwalze 100 gelangt. Die Filamente werden hierdurch zwischen den Plateauflächen 5 im wesentlichen nur mechanisch komprimiert, jedoch nicht eingeschmolzen, wodurch unerwünschte Verhärtungen zwischen den Bereichen 9 vermieden werden.

Darüber hinaus reduziert das Material 12 die Wärmeabgabe der Gravurwalze 100 durch Konvektion und Strahlung nach außen, so dass zur Erzielung einer gewünschten Temperatur an den Gravurflächen 5 eine im Vergleich zu herkömmlichen, innen beheizten Walzen nur geringere Heizleistung benötigt wird, wodurch Energie eingespart werden kann.

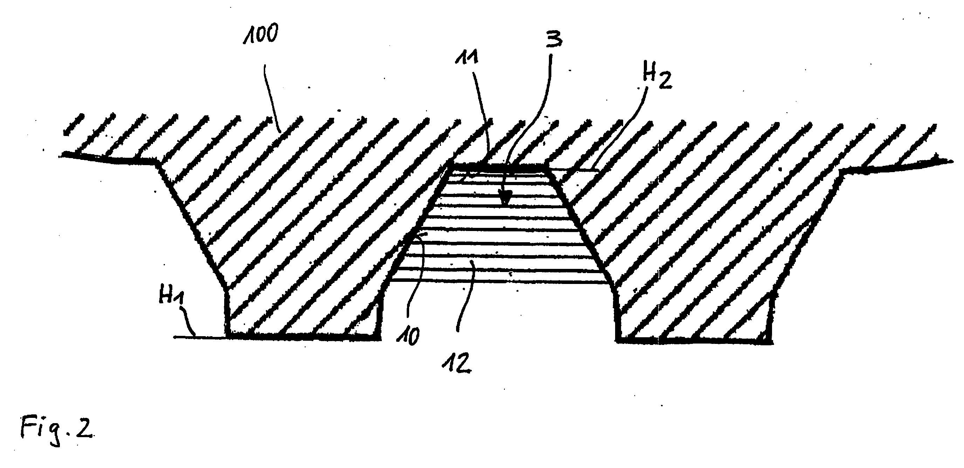

Ein etwa zu zwei Drittel der Höhe der Plateaufläche H1 über der Höhe der Sohle H2 mit einem wärmeisolierenden Material 12 ausgefülltes Gravurtal 3 ist schematisch in Fig. 2 dargestellt. Weist das Material auch elastische Eigenschaften auf, so kann es beim Verfestigen einer thermoplastische Filamente umfassenden Bahn 8 aus dem Mittenbereich zu den Flanken 10 hin gedrückt werden. Die Druckspitzen, die sich in das Gravurtal 3 hinein erstreckenden Filamente erfahren, können somit reduziert werden.

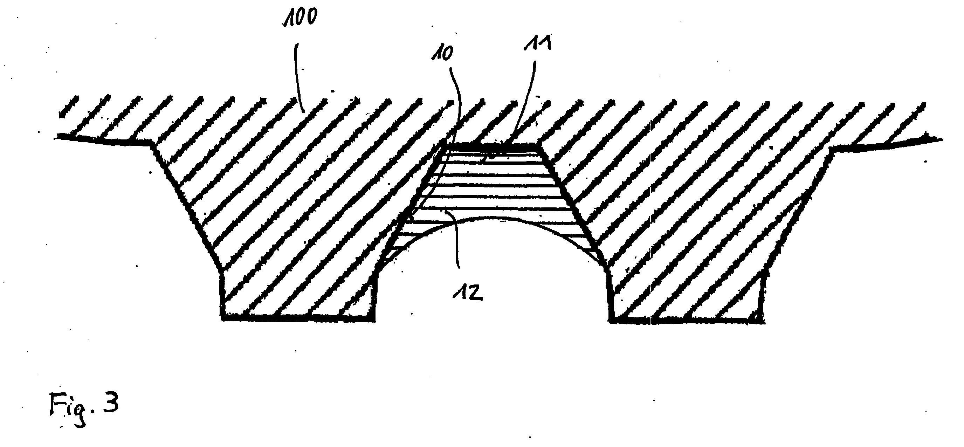

Bei dem weiteren Ausführungsbeispiel gemäß Fig. 3 ist die Oberfläche des Materials 12 muldenförmig ausgebildet, so dass sich Filamente zumindest teilweise in das Gravurtal 3 hineinverlagern können, ohne dass es hierzu einer Verformung des Materials bedarf.

Es ist ebenfalls möglich, als Material 12 ein komprimierbares, beispielsweise poröses Material zu verwenden, wodurch auf sich in das Gravurtal hereinerstreckende Filamente wirkende Druckspitzen weiter reduziert werden können.

Die Oberflächen der Gravurtäler oder Gravurflanken, die von dem Material 12 überdeckt sind, sind beispielsweise durch Sandstrahlen oder Laserbearbeitung aufgeraut. Die mittlere Rauheit Rₐ beträgt zwischen 0,8 µm und 12,5 µm.

### Bezugszeichenliste:

- 100: Gravurwalze
- 1: Arbeitsumfang
- 2: Gravur
- 3: Gravurtäler
- 4: Erhebungen
- 5: Plateauflächen
- 6: Walze
- 7: Walzenspalt
- 8: Bahn
- 9: Bereiche
- 10: Flanken
- 11: Sohlen
- 12: Material
- F1, F2: Rotationsachsen
- H1, H2: Höhen

## Patentansprüche

1. Vorrichtung,
mit einer Gravurwalze (100), die mit einer glatten Walze (6) einen Walzenspalt (7) bildet,
mit einer am Arbeitsumfang (1) der Gravurwalze (100) vorgesehenen Gravur (2), die Gravurtäler (3) und Plateauflächen (5) umfasst, wobei die Gravurtäler (3) mit wärmeisolierendem Material(12) vorgesehen sind,
**dadurch gekennzeichnet,**
**dass** der Abstand zwischen den Gravursohlen (11) und den Plateauflächen (5) 0,3 mm bis 1 mm beträgt,
und **dass** die Gravurtäler (3) zumindest teilweise mit dem wärmeisolierenden Material (12) von zumindest einem Zehntel ihrer Höhe (H1) ausgefüllt sind.

2. Gravurwalze nach Anspruch 1, **dadurch gekennzeichnet, dass** das Material (12) elastisch verformbar ist.

3. Gravurwalze nach Anspruch 1, **dadurch gekennzeichnet, dass** das Material (12) elastisch komprimierbar ist.

4. Gravurwalze nach Anspruch 1 oder 2, **dadurch gekennzeichnet, dass** das Material (12) Silikon umfasst.

5. Gravurwalze nach einem der Ansprüche 1 bis 4, **dadurch gekennzeichnet, dass** das Material (12) die Gravurtäler (3) mindestens zu einem Drittel von deren Höhe (H1) ausfüllt.

6. Gravurwalze nach einem der Ansprüche 1 bis 4, **dadurch gekennzeichnet, dass** das Material (12) die Gravurtäler (3) zu mindestens zwei Dritteln von deren Höhe ausfüllt.

7. Gravurwalze nach einem der Ansprüche 1 bis 6, **dadurch gekennzeichnet, dass** die Oberflächen der Gravurtäler und/oder Gravurflanken aufgeraut sind.

8. Gravurwalze nach Anspruch 7, **dadurch gekennzeichnet, dass** die mittlere Rauheit Rₐ der aufgerauten Oberflächen zwischen 0,8 µm und 12,5 µm beträgt.

9. Verfahren zur Verbesserung eines thermoplastischen Filamente umfassenden Vlieses, bei dem eine Lage von Filamenten einem von zwei Walzen (6) gebildeten Walzenspalt (7) zugeführt wird, von denen zumindest eine als Gravurwalze (100) ausgebildet und beheizt ist,
**dadurch gekennzeichnet,**
**dass** die Gravurwalze (100) die Merkmale eines der Ansprüche 1 bis 8 aufweist.

## Claims

1. Device
having a gravure roller (100) which together with a smooth roller (6) forms a roller nip (7),
having an engraving (2), provided at the working periphery (1) of the gravure roller (100), which includes engraving depressions (3) and plateau surfaces (5), the engraving depressions (3) being provided with heat-insulating material (12),
**characterized in that**
the distance between the engraving bases (11) and the plateau surfaces (5) is 0.3 mm to 1 mm,
and that the engraving depressions (3), at least in places, are filled with the heat-insulating material (12) to at least one-tenth of their height (H1).

2. Gravure roller according to Claim 1, **characterized in that** the material (12) is elastically deformable.

3. Gravure roller according to Claim 1, **characterized in that** the material (12) is elastically compressible.

4. Gravure roller according to Claim 1 or 2, **characterized in that** the material (12) includes silicone.

5. Gravure roller according to one of Claims 1 through 4, **characterized in that** the material (12) fills the engraving depressions (3) to at least one-third of their height (H1).

6. Gravure roller according to one of Claims 1 through 4, **characterized in that** the material (12) fills the engraving depressions (3) to at least two-thirds of their height (H1).

7. Gravure roller according to one of Claims 1 through 6, **characterized in that** the surfaces of the engraving depressions and/or engraving flanks are roughened.

8. Gravure roller according to Claim 7, **characterized in that** the average roughness Rₐ of the roughened surfaces is between 0.8 µm and 12.5 µm.

9. Method for improving a nonwoven fabric containing thermoplastic filaments, in which a ply of filaments is supplied to a roller nip (7) formed from two rollers (6), at least one of the rollers being designed as a gravure roller (100) and heated,
**characterized in that**
the gravure roller (100) has the features of one of Claims 1 through 8.

## Revendications

1. Dispositif comportant
un cylindre gravé (100) qui, avec un cylindre lisse (6), forme une fente entre cylindres (7) ;
une gravure (2) prévue sur une circonférence de travail (1) du cylindre gravé (100) et comprenant des vallées de la gravure (3) et des surfaces en forme de plateau (5), les vallées de la gravure (3) étant dotées d'un matériau isolant thermiquement (12) ;
**caractérisé par le fait que** :
la distance entre le fond des gravures (11) et les surfaces en forme de plateau (5) est de 0,3 mm à 1 mm ; et
les vallées de la gravure (3) sont remplies au moins partiellement du matériau isolant thermiquement (12) sur au moins un dixième de leur hauteur (H1).

2. Cylindre gravé selon la revendication 1, **caractérisé par le fait que** le matériau (12) est élastiquement déformable.

3. Cylindre gravé selon la revendication 1, **caractérisé par le fait que** le matériau (12) est élastiquement comprimable.

4. Cylindre gravé selon l'une des revendications 1 ou 2, **caractérisé par le fait que** le matériau (12) comprend du silicone.

5. Cylindre gravé selon l'une des revendications 1 à 4, **caractérisé par le fait que** le matériau (12) remplit les vallées de la gravure (3) au moins sur un tiers de leur hauteur (H1).

6. Cylindre gravé selon l'une des revendications 1 à 4, **caractérisé par le fait que** le matériau (12) remplit les vallées de la gravure (3) au moins sur deux tiers de leur hauteur (H1).

7. Cylindre gravé selon l'une des revendications 1 à 6, **caractérisé par le fait que** les surfaces des vallées de la gravure et/ou des flancs des gravures sont rugosifiées.

8. Cylindre gravé selon la revendication 7, **caractérisé par le fait que** la rugosité moyenne Rₐ des surfaces rugosifiées est comprise entre 0,8 µm et 12,5 µm.

9. Procédé d'amélioration d'un non-tissé contenant des filaments thermoplastiques, dans lequel une couche de filaments est engagée dans une fente entre cylindres (7) formée entre deux cylindres (6) dont au moins l'un prend la forme d'un cylindre gravé (100) et est chauffé, **caractérisé par le fait que** le cylindre gravé (100) présente les caractéristiques de l'une des revendications 1 à 8.
